# DEMANDE DE BREVET EUROPEEN

(11) **EP 1 583 286 A1**
(43) Date de publication de la demande: **05.10.2005**
(21) Numéro de dépôt: 05290567.6
(22) Date de dépôt: 15.03.2005
(51) Int. Cl.: H04L 12/28, H04N 7/173

(54) **Procédé et dispositif de communication de données par paquets à haut débit**

(30) Priorité: 30.03.2004 FR 0403328
(71) Demandeur: TDF, 75015 Paris (FR)
(72) Inventeur: Darche, Davy, 54000 Nancy (FR)
(74) Mandataire: Hassine, Albert

(57) **Abrégé**

Procédé et système de communication de données par paquets entre un serveur et un terminal, selon un protocole avec accusé de réception. On transmet des paquets au terminal, via un premier réseau, de diffusion, unidirectionnel. Le terminal émet des accusés de réception des paquets via un second réseau, de télécommunication, bidirectionnel, interconnecté au premier réseau par un routeur. On transmet des prochains paquets vers le terminal si le terminal a émis des accusés de réception de paquets précédents. La transmission via le premier réseau s'effectue à un débit de diffusion suivant des variations de sens opposé aux variations du délai de la transmission des accusés de réception. Le routeur aiguille des paquets vers le terminal en utilisant la voie descendante du second réseau, générant une augmentation du débit sur la voie descendante, pour diminuer le délai de transmission des accusés de réception sur la voie montante et, de là, augmenter le débit de diffusion.

## Description

La présente invention est relative au domaine de la coopération des réseaux de télécommunication et de diffusion, et plus précisément des débits de transmission dans les réseaux de ce type.

Des services multimédia se développent pour les utilisateurs des réseaux de télécommunication. Ces services permettent notamment à un utilisateur d'envoyer une requête à un serveur multimédia afin de télécharger sur un terminal ou même de recevoir en flux continu (en anglais 'streaming') des séquences vidéo telles que des films, depuis le serveur via un réseau de type Internet par exemple. Ce type de transmission requiert d'importants débits de transmission car les données transmises sont de taille importante.

Dans un tel contexte, il apparaît clairement qu'un des problèmes majeurs auquel est confronté un réseau de télécommunication est la limitation de son débit de transmission.

On connaît des réseaux qui offrent un important débit de transmission, tels que par exemple un réseau DVB-T, pour 'Digital Video Broadcast -Terrestrial', réseau de diffusion hertzien. Ces réseaux à haut débit de transmission sont des réseaux de diffusion, c'est-à-dire unidirectionnel, depuis un émetteur, vers un récepteur.

Dans le contexte décrit ci-dessus, ces réseaux de diffusion ne permettent de ce fait pas à un terminal d'émettre une requête de données vers le serveur multimédia puisqu'il n'y a pas de communication possible depuis le récepteur vers le serveur.

On entend par 'serveur', une entité distante agencée pour transmettre des données. On comprendra ainsi qu'un tel serveur peut être un hôte distant ou encore un terminal.

On connaît une architecture de réseau qui propose des solutions de transmission haut débit en faisant coopérer un réseau de télécommunication bidirectionnel et un réseau de diffusion à haut débit pour tirer avantage de chacun d'eux. En effet, l'utilisateur a la possibilité d'envoyer des requêtes de données notamment à un serveur via le réseau de télécommunication bidirectionnel et de recevoir des données qu'il a requises via le réseau de diffusion haut débit. Une telle architecture permet en outre de bénéficier de la couverture géographique du réseau de diffusion utilisé. Le document « High Speed Internet over DVB-T : A business alternative to ADSL in rural areas » de P. Clement de Thales Broadcast and Multimedia, France, 2003, divulgue une architecture de réseau de ce type.

Dans une telle architecture, un terminal peut donc recevoir des données depuis un serveur via le réseau haut débit de diffusion. Dans le cas d'une transmission de données avec accusé de réception, le terminal accuse réception des données reçues en émettant des accusés de réception à destination du serveur via le réseau de télécommunication bidirectionnel.

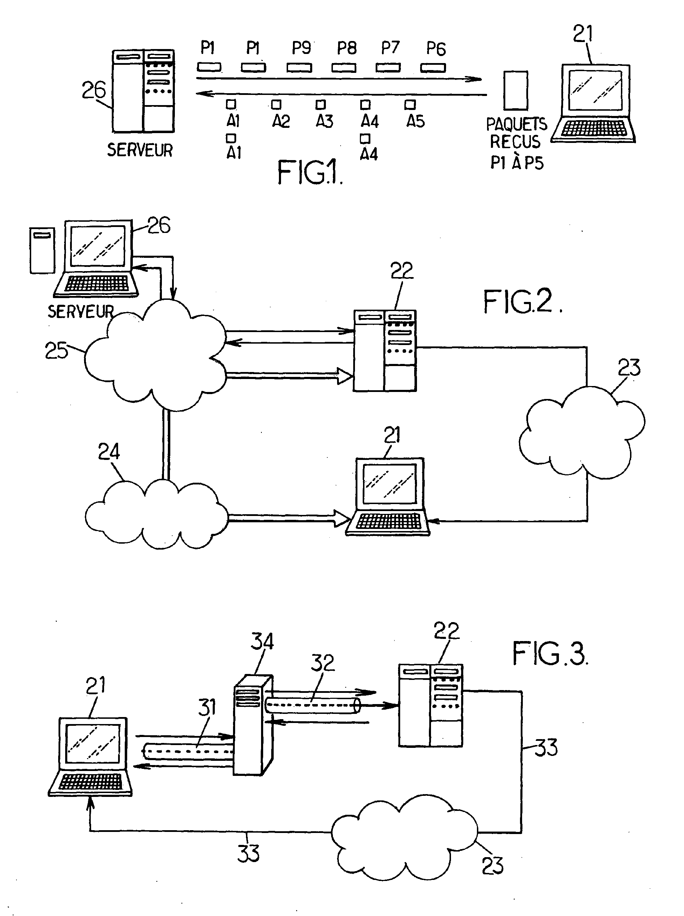

La figure 1 illustre une transmission classique de paquets de données avec accusé de réception depuis un serveur à destination d'un terminal. Le serveur 26 émet à destination d'un terminal 21 des paquets P1-P9. Les cinq premiers paquets émis ont été reçus correctement par le terminal 21. Ce dernier envoie par conséquence au serveur 26 des paquets d'accusé de réception correspondants, référencés A1-A5. Lorsque le serveur ne reçoit pas d'accusé de réception sur un ou plusieurs paquets émis, après un certain temps, il considère que ce ou ces paquets non acquittés sont perdus. Par conséquent, le serveur interrompt la transmission des paquets et réémet le ou les paquets perdus. Ainsi, l'exemple de la figure 1 représente le cas où, après un certain temps, l'accusé de réception A1 correspondant au paquet P1 n'étant pas reçu, le serveur réémet ce paquet P1, considéré comme perdu. Un protocole de transmission avec accusé de réception classiquement utilisé est le protocole TCP pour 'Transmission Control Protocol'.

On notera, par conséquent, que le débit d'une transmission de données avec accusé de réception est soumis au délai de la transmission des accusés de réception respectifs. Pour une transmission de données avec accusé de réception, le débit de transmission des données via le réseau de diffusion est lié au délai de transmission des accusés de réception via le réseau de télécommunication bidirectionnel.

Une communication dans une architecture de ce type est réalisée du serveur vers le terminal dans le réseau de diffusion et du terminal vers le serveur, c'est-à-dire sur une voie montante, dans le réseau de télécommunication bidirectionnel. Une telle communication génère un trafic unidirectionnel dans le réseau de télécommunication bidirectionnel, et de ce fait ne correspond pas à un trafic classique au sein d'un réseau de télécommunication bidirectionnel.

Cette caractéristique de trafic énoncée ci-dessus est spécifique à une architecture combinée de deux réseaux comme décrite ci-dessus. Elle peut entraîner, dans certains réseaux de télécommunication, notamment des réseaux de télécommunication mobile sans fil, par exemple de type GPRS pour 'General Packet Radio Service', une augmentation du délai des accusé de réception sur la voie montante depuis le terminal vers le serveur dans le réseau de télécommunication bidirectionnel et par conséquent une diminution du débit de la transmission de données du réseau de diffusion lorsqu'une telle transmission est réalisée suivant un protocole de transmission avec accusé de réception.

La présente invention vise à proposer une solution à ce problème.

Un premier aspect de l'invention propose à cet effet un procédé de communication de données par paquets entre un serveur et un terminal, selon un protocole de transmission avec accusé de réception, comprenant les étapes de:
- transmission de données par paquets vers le terminal, via un premier réseau, de diffusion, unidirectionnel,
- émission, par le terminal, d'accusés de réception des paquets via un second réseau, de télécommunication, bidirectionnel et interconnecté au premier réseau par un routeur,
- transmission de prochains paquets vers le terminal si le terminal a émis des accusés de réception de paquets précédents, la transmission des données via le premier réseau s'effectuant à un débit de diffusion qui suit des variations de sens opposé aux variations du délai de la transmission des accusés de réception,
dans lequel le routeur aiguille des données vers le terminal en utilisant la voie descendante du second réseau, générant une augmentation du débit sur ladite voie descendante, pour diminuer le délai de transmission des accusés de réception sur la voie montante et, de là, augmenter le débit de diffusion.

Un deuxième aspect de l'invention propose un système de communication de données par paquets entre un serveur et un terminal, selon un protocole de transmission avec accusé de réception, comprenant :
- un premier réseau, de diffusion, unidirectionnel, pour la transmission des données par paquets vers le terminal ;
- un second réseau, de télécommunication, bidirectionnel, notamment pour la transmission d'accusés de réception émanant du terminal ; et
- un routeur interconnectant les premier et second réseaux,
la transmission des données via le premier réseau s'effectuant à un débit de diffusion qui suit les variations de sens opposé aux variations du délai de transmission des accusés de réception,
dans lequel le routeur est agencé pour aiguiller des données vers le terminal en utilisant la voie descendante du second réseau, générant une augmentation du débit sur ladite voie descendante, pour diminuer le délai de transmission des accusés de réception sur la voie montante et, de là, augmenter le débit de diffusion.

Un troisième aspect de l'invention propose un routeur du système de communication de données par paquets énoncé dans le deuxième aspect, agencé pour aiguiller des données vers le terminal via le second réseau.

Un quatrième aspect de l'invention propose un terminal du système de communication de données par paquets énoncé dans le deuxième aspect, comportant des moyens pour interpréter les données aiguillées par le routeur.

D'autres aspects, buts et avantages de l'invention apparaîtront à la lecture de la description d'un de ses modes de réalisation.

L'invention sera également mieux comprise à l'aide des dessins, sur lesquels :
- la figure 1, déjà commentée ci-dessus illustre une transmission de données classique avec accusé de réception ;
- la figure 2 est une vue d'ensemble de l'architecture du réseau selon un mode de réalisation de l'invention ;
- la figure 3 est une vue détaillée de l'architecture du réseau selon un mode de réalisation de l'invention ;
- la figure 4 illustre des échanges de données selon un mode de réalisation de l'invention ;
- la figure 5 illustre un organigramme correspondant à un traitement pour aiguiller des paquets de données selon un mode de réalisation de l'invention.

Dans un mode de réalisation de l'invention, le réseau de télécommunication bidirectionnel est un réseau de télécommunication mobile sans fil. A titre illustratif, un mode de réalisation de l'invention est décrit avec un réseau de télécommunication bidirectionnel de type GPRS et un réseau de diffusion de type DVB-T. L'invention couvre d'autres modes de réalisation par combinaison d'autres réseaux de télécommunication et de diffusion, notamment des réseaux de diffusion de type DVB-S ou encore DVB-H.

Les sections suivantes énoncent les principes de base d'une transmission de paquets avec accusé-de réception dans une architecture de réseaux selon un mode de réalisation de la présente invention.

Dans un transfert de données avec accusé de réception, par exemple un transfert de données via une connexion de type TCP, les paquets de données sont envoyés dans un sens et acquittés par des paquets d'accusé de réception qui transitent en sens inverse. Plus précisément, dans une telle architecture, combinant deux réseaux, les communications de sens différents utilisent des réseaux différents. Ainsi, un téléchargement de données avec accusé de réception par un terminal est réalisé par la transmission des données via le réseau de diffusion et par la transmission des accusés de réception via le réseau de télécommunication.

Le débit d'une connexion avec accusé de réception est directement lié au temps entre l'émission d'un paquet de données et la réception de l'accusé de réception correspondant à ce paquet de donnée. On définit classiquement un paramètre d'une transmission avec accusé de réception, le RTT pour 'Round Trip Time', représentant le temps entre l'émission d'un paquet de donnée et la réception de l'accusé de réception correspondant. Par conséquent, plus le RTT augmente, plus le débit de la connexion TCP diminue. En outre, le paramètre RTT inclus le délai de transmission des accusés de réception, et donc plus le délai de transmission des accusés de réception diminue plus le débit de la connexion TCP augmente.

La demanderesse constate que dans le cas d'une utilisation exclusive de la voie montante dans le réseau de télécommunication de type GPRS, le paramètre RTT augmente brutalement (de 1s à plus de 3s) pour des débits sur la voie montante dépassant une certaine valeur, de l'ordre de 10 kbits/s.

Dans une telle architecture, on définit un mode de transmission bidirectionnel avec accusé de réception comme étant un mode de transmission permettant d'envoyer, via le réseau de télécommunication, des paquets de données du terminal vers un serveur par exemple en recevant les accusés de réception correspondants via le réseau de télécommunication. On définit un mode de transmission unidirectionnel comme étant un mode de transmission permettant d'envoyer, via le réseau de télécommunication, des paquets de données du terminal vers un serveur, en recevant les paquets d'accusé de réception correspondants par une voie d'un autre réseau que ce réseau de télécommunication.

Pour une connexion en mode de transmission bidirectionnelle, dans le réseau de télécommunication de type GPRS, la demanderesse constate que le paramètre RTT reste sensiblement égal à 1 s pour des débits de transmission sur la voie montante inférieurs à 20 kbits/s. Pour une connexion en mode de transmission unidirectionnel, on constate que le paramètre RTT reste sensiblement égal à 1 seconde pour des débits de transmission sur la voie montante inférieurs à 10 kbits/s, puis le paramètre RTT augmente nettement, jusqu'à 3 ou 4 secondes pour des débits qui dépassent 10 kbits/s.

Un objectif de la présente invention est de contrôler le débit des connexions avec accusé de réception dans une architecture basée sur une combinaison de réseau telle décrite dans la figure 2, afin que le débit de diffusion soit suffisamment important pour offrir des services multimédia satisfaisants, quelque soit le débit de transmission sur la voie montante dans le réseau de télécommunication.

Dans un mode de transmission unidirectionnel, le délai de transmission des paquets d'accusés de réception sur la voie montante du réseau de télécommunication augmente notamment lorsque le terminal effectue sur cette même voie une nouvelle transmission d'autres paquets que les paquets d'accusé de réception, correspondant à une autre requête faite au serveur par exemple. En effet, la quantité de données à transmettre depuis le terminal sur cette voie montante augmente alors que le débit (ou encore bande passante) de cette voie n'a pas sensiblement augmenter ; par conséquent, le délai de transmission des accusés de réception augmente, et de là le débit de diffusion correspondant diminue. Dans un mode de réalisation de l'invention, le routeur 22 aiguille des paquets émis par le serveur à destination du terminal via le réseau de télécommunication, afin de générer un débit de transmission sur la voie descendante du réseau de télécommunication pour diminuer le délai de transmission des accusés de réception et de là augmenter le débit de diffusion.

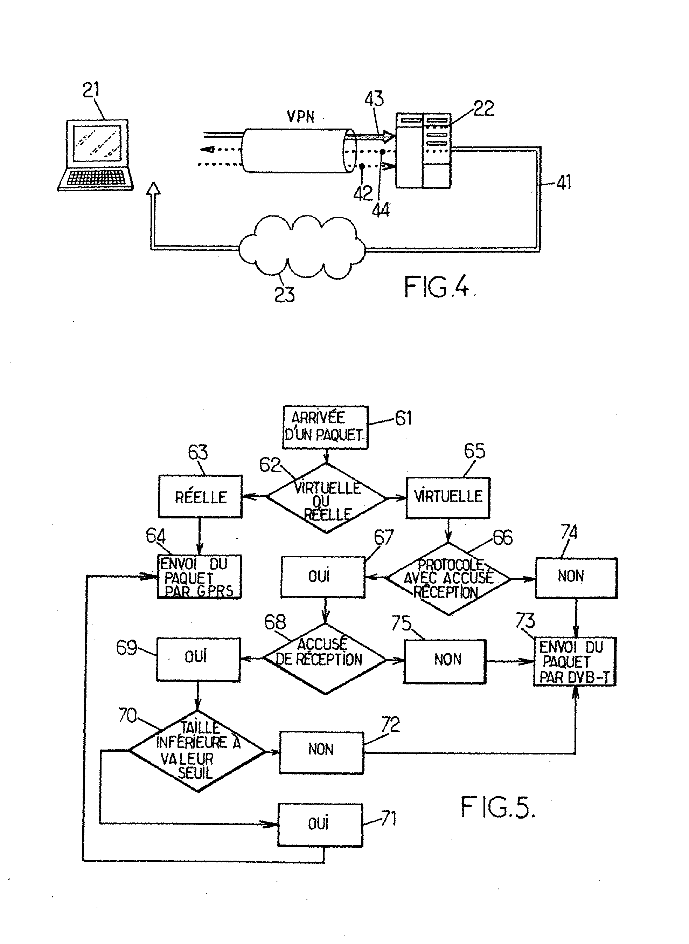

La figure 4 illustre un cas dans lequel la voie montante du réseau de télécommunication n'est pas utilisée exclusivement pour la transmission des accusés de réception mais elle est également utilisée pour la transmission de paquets de données vers le serveur. Cette figure 4 illustre donc notamment le cas où, lorsque l'utilisateur exécute une requête 42 au serveur, alors qu'il est en train de télécharger un fichier. Le terminal reçoit des données depuis le serveur via le réseau de diffusion 41. Il acquitte ces données par la transmission de paquets d'accusé de réception 44 via le réseau de télécommunication de type GPRS. Il envoie simultanément une nouvelle requête 43 au serveur en transmettant des paquets de données via le réseau de télécommunication. Dans ce cas là, comme précédemment décrit, le paramètre RTT de la communication augmente, puisque la quantité de données à transmettre sur la voie montante du réseau de télécommunication augmente sans que le débit de voie montante suive cette augmentation.

Toutefois, dans certaines circonstances, comme l'a constaté la demanderesse, le délai de transmission des accusés de réception sur la voie montante dans le réseau de télécommunication de type GPRS peut diminuer avantageusement, notamment lorsqu'on augmente le débit de la voie descendante.

De ce fait, la transmission de paquets correspondante à cette autre requête est de préférence effectuée en mode bidirectionnel. Il en résulte une diminution du délai de transmission sur la voie montante et de là une augmentation du débit de diffusion. Dans un mode de réalisation de l'invention, le routeur est adapté pour aiguiller des paquets de données par la voie descendante du réseau de télécommunication. Ainsi, dans la figure 4, le serveur acquitte la réception des paquets 43 en émettant des paquets d'accusé de réception que le routeur aiguille via le réseau de télécommunication. De ce fait, le paramètre RTT correspondant à la connexion de téléchargement, 41 et 42, diminue ainsi, et le débit de diffusion augmente.

Etant donné que les performances des débits d'une connexion avec accusé de réception sont liées directement à la valeur du paramètre RTT correspondant à la connexion, il apparaît avantageux de maintenir la valeur du RTT la plus faible possible.

La figure 2 décrit une combinaison des réseaux de télécommunication de type GPRS et de diffusion de type DVB-T connectant un serveur 26 et un terminal 21. Le terminal 21 présente une interface adaptée pour se connecter au réseau de télécommunication de type GPRS et pour recevoir des données via le réseau de diffusion 23. Le serveur 26 est connecté au réseau Internet 25. Le réseau de télécommunication de type GPRS est utilisé par le terminal en tant que réseau d'accès au réseau Internet 25.

Dans un mode réalisation de l'invention, le terminal initie tout d'abord une connexion via un réseau privé virtuel VPN, pour 'Virtual Private Network' pour se connecter à un routeur 22. Un tel réseau VPN offre de préférence des services d'authentification par mot de passe, des services de compression ainsi que des services de cryptage des données sur le réseau de télécommunication de type GPRS. Le trafic des paquets de données requis à l'initiation et au maintien d'une telle connexion est envoyé et reçu via le réseau de télécommunication bidirectionnel. A l'issue de cette étape le terminal et le routeur peuvent communiquer en utilisant des adresses IP virtuelles définies par le routeur 22. Lorsque le terminal souhaite exécuter une requête sur le serveur, connecté de préférence à un réseau de type Internet, il transmet sa requête au routeur 22 via le VPN. Puis le routeur 22 est adapté pour transmettre cette requête dans le réseau Internet 25 au serveur 26. Le routeur transmet ensuite au terminal les paquets de données correspondants à cette requête reçus du serveur via le réseau de diffusion.

La connexion de réseau VPN utilisée est de préférence gérée selon le protocole PPTP, pour 'Point to Point Tunnelling Protocol'. Les paquets transmis dans le VPN sont de préférence préalablement compressés, afin d'économiser de la bande passante dans le réseau de télécommunication de type GPRS, puis cryptés. L'utilisation d'un réseau VPN garantit l'intégrité des données qui transitent par ce réseau. Cette caractéristique s'avère être très intéressante lorsque notamment, on utilise des translations d'adresses pour les terminaux connectés au réseau de télécommunication de type GPRS.

Les connexions de type TCP sont en général identifiées par des sessions. Une session se définit par le quadruplet comprenant une addresse IP de l'émetteur (adresse IP source), une adresse IP du récepteur (adresse IP destination), un port de l'émetteur (port source) et un port du récepteur (port destination). Dans le cas d'une translation d'adresse, l'adresse IP source et le port source d'un paquet envoyé du terminal vers le serveur, sont remplacés, ou encore translatés, par une adresse IP source d'un routeur 34 qui réalise la translation d'adresse. Dans un réseau classique, c'est-à-dire non combiné, lorsqu'un paquet est envoyé par le serveur vers le terminal, il passe à nouveau par le routeur 34 ayant réalisé la translation. De ce fait, ce routeur de translation réalise une translation inverse à celle décrite ci-dessus. Par un tel procédé de translation d'adresse, l'adresse IP source du terminal est masquée par le routeur de translation 34.

Dans une architecture selon un mode de réalisation de l'invention, les paquets émis par le serveur à destination du client sont aiguillés par le routeur 22 sur le réseau de diffusion. Ces paquets ne passent donc pas à nouveau par le routeur de translation ayant opéré sur les paquets reçus du terminal à destination du serveur. L'adresse IP des paquets aiguillés sur le réseau de diffusion 23 ne correspond de ce fait pas à l'adresse source initiale du terminal.

En utilisant un réseau VPN, on établit une session de type TCP de préférence entre les adresses IP virtuelles du terminal et les adresses IP virtuelles du routeur 22. Par conséquence, le routeur connaît ainsi l'adresse IP virtuelle du terminal 21, et les paquets aiguillés sur le réseau de diffusion DVB-T par le routeur 22 contiennent une adresse IP destination correspondant à l'adresse IP virtuelle du terminal.

La figure 3 illustre une telle session VPN. Ainsi, les paquets de données échangés via la session VPN 31, 32, correspondante à une connexion bidirectionnelle dans le réseau GPRS, contiennent une adresse IP virtuelle du terminal. Les paquets de données 33 transmis par le routeur 22 via le réseau de diffusion contiennent également l'adresse IP virtuelle du terminal.

Le routeur 22 applique de préférence une règle de routage, selon laquelle, pour chaque connexion VPN, les paquets comprenant une adresse destination correspondant à l'adresse IP virtuelle relative à la session VPN sont aiguillés via le réseau de diffusion vers le terminal.

Le réseau de diffusion de type DVB-T offre une bande passante disponible pour la transmission de données commune à tous les utilisateurs. Toutefois, de préférence, dans une telle architecture, le routeur réserve un débit minimal à destination de chaque terminal sur le réseau de diffusion pour la transmission des données. Il garantit également un débit maximal en sortie. Ce contrôle de débit dans le réseau de diffusion réalisé par le routeur évite des phénomènes de transmission en rafale et contribue à la stabilité du système.

Selon un protocole de type TCP, le serveur s'attend à recevoir les paquets d'accusé de réception séquentiellement ordonnés. Ainsi, lorsque le serveur reçoit l'accusé de réception A4 correspondant au paquet P4, il en déduit que les paquets précédents ont été reçus correctement par le terminal. De ce fait, il est généralement possible, dans des protocoles de ce type, d'acquitter un groupe de paquets de données reçus plutôt que de procéder à l'acquittement des paquets reçus un par un. La bande passante utilisée pour la transmission de ces acquittements est de ce fait réduite. Le protocole TCP offre cette possibilité via un paramètre de configuration nommé 'DelayedAck'.

D'après ce qui précède, grâce au contrôle de débit en sortie du routeur, puis grâce à la configuration d'un acquittement de réception par groupe de paquets, le délai de transmission des accusés de réception sur la voie montante du réseau de télécommunication de type GPRS est contrôlé et reste acceptable pour fournir une valeur de paramètre RTT permettant un haut débit sur le réseau de diffusion. Ainsi, en maintenant un débit de transmission sur la voie montante du réseau de télécommunication de type GPRS à 7 kbits/s, on obtient un délai de transmission des accusés de réception permettant de fournir un débit de diffusion de l'ordre de 700 kbits/s, dans le réseau de diffusion.

Dans un mode de réalisation de l'invention, dans lequel l'architecture combine un réseau de télécommunication utilisé en tant que réseau d'accès à un réseau de type Internet, et dans lequel le protocole de transmission avec accusé de réception utilisé est le protocole TCP, le terminal est de préférence configuré comme suit :
- la taille des fenêtres TCP est configurée de manière relativement grande ;
- une option, nommée Timestamps, du protocole TCP est activée ;
- une option, nommée Sacks, du protocole TCP est activée ;
- une option, nommée DSacks, du protocole TCP est activée ;
- une option, nommée DelayedAck, du protocole TCP est activée ;
- une option, nommée WindowScaling, du protocole TCP est activée ;

La figure 6 décrit, selon un mode de réalisation de la présente invention, un procédé d'aiguillage, ou encore de routage, de paquets réalisé par le routeur 22 sur réception d'un paquet à destination du terminal 22. Le routeur 22 reçoit, à l'étape 61, un paquet contenant une adresse de destination correspondant au terminal 21. Cette adresse de destination est contrôlée, à l'étape 62, pour déterminer si elle correspond à une adresse de même type qu'une adresse du réseau de télécommunication de type GPRS ou si elle correspond à une adresse IP virtuelle du réseau VPN (tel que décrit en référence à la figure 4 précédemment). Si l'adresse de destination correspond à une adresse du réseau de télécommunication, étape 63, le routeur aiguille le paquet via le réseau de télécommunication, étape 64. Si l'adresse de télécommunication est une adresse IP virtuelle, étape 65, on contrôle le type de protocole de transmission correspondant à ce paquet, étape 66. Si le type de protocole est un protocole de transmission avec accusé de réception, étape 67, on contrôle si le paquet est un accusé de réception ou non, étape 68. Si ce paquet est un accusé de réception, étape 69, on compare la taille du paquet avec une valeur seuil, étape 70. Si le paquet est de taille inférieure ou égale à la valeur seuil, étape 71, le routeur aiguille le paquet via le réseau de télécommunication, étape 64. Si le paquet est de taille supérieure à la valeur seuil, étape 72, le routeur aiguille le paquet via le réseau de diffusion, étape 73. Puis, si le paquet n'est pas un accusé de réception, étape 75, le routeur aiguille le paquet via le réseau de diffusion, étape 73. Si le paquet n'est pas transmis selon le protocole de transmission avec accusé de réception, étape 74, le routeur aiguille le paquet via le réseau de diffusion, étape 73.

Un mode de réalisation de l'invention propose donc une architecture de réseaux permettant d'augmenter le débit des connexions avec accusé de réception, de type TCP, en fournissant un accès haut débit par voie radio pour le téléchargement de paquets de données vers un terminal. Les débits offerts dans un mode de réalisation de l'invention, sont de l'ordre de 700 kbits/s en moyenne pour un transfert de paquets de données par le protocole FTP vers le terminal, avec un débit de pic pouvant atteindre 1 Mbits/s.

Un mode de réalisation de l'invention permettrait donc de fournir un accès à un réseau de type Internet haut débit à de nouvelles régions géographiques en utilisant des infrastructures de réseaux, telle que notamment celle d'un réseau de diffusion de type DVB-T, qui offrirait une large couverture géographique

## Revendications

1. Procédé de communication de données par paquets entre un serveur et un terminal, selon un protocole de transmission avec accusé de réception, comprenant les étapes de:
- transmission de données par paquets vers le terminal, via un premier réseau, de diffusion, unidirectionnel,
- émission, par le terminal, d'accusés de réception des paquets via un second réseau, de télécommunication, bidirectionnel et interconnecté au premier réseau par un routeur,
- transmission de prochains paquets vers le terminal si le terminal a émis des accusés de réception de paquets précédents, la transmission des données via le premier réseau s'effectuant à un débit de diffusion qui suit des variations de sens opposé aux variations du délai de la transmission des accusés de réception,
dans lequel le routeur aiguille des données vers le terminal en utilisant la voie descendante du second réseau, générant une augmentation du débit sur ladite voie descendante, pour diminuer le délai de transmission des accusés de réception sur la voie montante et, de là, augmenter le débit de diffusion.

2. Procédé selon la revendication 1, dans lequel on transmet, avant l'étape de transmission de paquets par la voie descendante du second réseau, des paquets de données depuis le terminal vers le serveur sur la voie montante du premier réseau, et
dans lequel les paquets transmis par la voie descendante sont des paquets d'accusé de réception relatifs à ladite transmission de données sur la voie montante.

3. Procédé selon l'une quelconque des revendications 1 et 2, dans lequel le routeur aiguille vers le terminal via la voie descendante du second réseau les paquets ayant une taille inférieure à une valeur seuil et via le premier réseau les paquets ayant une taille supérieure à ladite valeur seuil.

4. Procédé selon l'une quelconque des revendications 1 à 3, dans lequel le protocole de transmission avec accusé de réception garantit une transmission ordonnée des paquets ; et dans lequel on réduit la quantité d'accusés de réception à transmettre sur la voie montante du second réseau en émettant un accusé de réception correspondant à un groupe de paquets de données reçus, pour augmenter le débit de diffusion.

5. Procédé selon l'une quelconque des revendications 1 à 4, dans lequel le second réseau est un réseau d'accès à un réseau de type Internet, dans lequel le terminal se connecte au routeur via un réseau virtuel privé, ou encore VPN, en utilisant des adresses IP virtuelles respectivement source pour le terminal et destination pour le routeur, et dans lequel le routeur, recevant un paquet contenant une adresse de destination du terminal, aiguille ledit paquet suivant les étapes suivantes :
- si ladite adresse de destination est une adresse de même type qu'une adresse dans le second réseau, le routeur aiguille ledit paquet vers le terminal via le second réseau ;
- si ladite adresse de destination est une adresse virtuelle du réseau VPN, soit dans le cas où ledit paquet n'est pas transmis selon le protocole de transmission avec accusé de réception ; ou soit dans le cas où ledit paquet est transmis selon le protocole de transmission avec accusé de réception et ledit paquet n'est pas un accusé de réception, le routeur aiguille ledit paquet via le premier réseau ;
- si ledit paquet est un accusé de réception du protocole de transmission avec accusé de réception de taille inférieure à une valeur seuil, le routeur aiguille ledit paquet via le second réseau.

6. Système de communication de données par paquets entre un serveur et un terminal, selon un protocole de transmission avec accusé de réception, comprenant :
- un premier réseau, de diffusion, unidirectionnel, pour la transmission des données par paquets vers le terminal ;
- un second réseau, de télécommunication, bidirectionnel, notamment pour la transmission d'accusés de réception émanant du terminal ; et
- un routeur interconnectant les premier et second réseaux,
la transmission des données via le premier réseau s'effectuant à un débit de diffusion qui suit les variations de sens opposé aux variations du délai de transmission des accusés de réception,
dans lequel le routeur est agencé pour aiguiller des données vers le terminal en utilisant la voie descendante du second réseau, générant une augmentation du débit sur ladite voie descendante, pour diminuer le délai de transmission des accusés de réception sur la voie montante et, de là, augmenter le débit de diffusion.

7. Système selon la revendication 6, dans lequel :
- le terminal est agencé pour émettre en outre des paquets requêtes sur la voie montante du second réseau ;
- le serveur accuse réception des paquets requêtes en émettant des accusés de réception ;
- le routeur aiguille lesdits accusés de réception vers la voie descendante du second réseau,
ces accusés de réception étant aiguillés en tant que données générant une augmentation du débit sur ladite voie descendante et, de là, augmentant le débit de diffusion.

8. Système selon la revendication 6 ou 7, dans lequel le routeur aiguille lesdites données sous forme de paquets, et dans lequel le routeur est agencé pour aiguiller vers le terminal :
- via la voie descendante du second réseau, les paquets ayant une taille inférieure à une valeur seuil,
- et, via le premier réseau, les paquets ayant une taille supérieure à ladite valeur seuil.

9. Système selon l'une quelconque des revendications 6 à 8, dans lequel le terminal, le serveur et le routeur, au moins, sont agencés pour mettre en oeuvre, en coopération, le procédé selon l'une des revendications 1 à 5.

10. Routeur d'un système de communication de données par paquets selon la revendication 9, agencé pour aiguiller des données vers le terminal via le second réseau.

11. Terminal d'un système de communication de données par paquets selon la revendication 9, comportant des moyens pour interpréter les données aiguillées par le routeur.
